(19) Europäisches Patentamt
European Patent Office
Office européen des brevets

(11) EP 3 383 950 B1

(12) EUROPEAN PATENT SPECIFICATION

(45) Date of publication and mention of the grant of the patent:
**17.06.2020 Bulletin 2020/25**

(21) Application number: **15909513.2**

(22) Date of filing: **03.12.2015**

(51) Int Cl.:
***C08L 23/06*** *(2006.01)* ***C08J 9/00*** *(2006.01)*

(86) International application number:
**PCT/CN2015/096250**

(87) International publication number:
**WO 2017/091996 (08.06.2017 Gazette 2017/23)**

(54) **HIGH POROSITY MICROCELLULAR POLYETHYLENE**

HOCHPORÖSES MIKROZELLULÄRES POLYETHYLEN

POLYÉTHYLÈNE MICROCELLULAIRE À POROSITÉ ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.10.2018 Bulletin 2018/41**

(73) Proprietor: **DOW GLOBAL TECHNOLOGIES LLC**
**Midland, MI 48674 (US)**

(72) Inventors:
- **CHEN, Cheng**
  **Shanghai 200120 (CN)**
- **SUN, Gangwei**
  **Pudong New District**
  **Shanghai 201203 (CN)**
- **ESSEGHIR, Mohamed**
  **Collegeville**
  **Pennsylvania 19426 (US)**
- **COGEN, Jeffrey M.**
  **Collegeville**
  **Pennsylvania 19426 (US)**
- **DU, Zhe**
  **Shanghai 200237 (CN)**
- **ZHANG, Jianxin**
  **Shanghai 200307 (CN)**

(74) Representative: **Boult Wade Tennant LLP**
**Salisbury Square House**
**8 Salisbury Square**
**London EC4Y 8AP (GB)**

(56) References cited:

| | |
|---|---|
| **WO-A1-00/00520** | **CN-A- 1 788 047** |
| **CN-A- 101 679 659** | **JP-A- 2002 338 722** |
| **JP-A- 2002 338 722** | **JP-A- 2007 051 190** |
| **US-A1- 2004 220 287** | **US-B1- 6 492 453** |

- **ZHANG YUXIA ET AL.: 'Extrusion foaming of DCP slightly cross-linked high-density polyethylene by supercritical C02' CHINA PLASTICS vol. 26, no. 6, 30 June 2012, pages 81 - 86, XP009506766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 383 950 B1

## Description

FIELD OF THE INVENTION

This invention relates to polyethylene (PE) foams. In one aspect, the invention relates to PE foams useful as telecom insulation while in another aspect, the invention relates to coaxial and radio frequency cables comprising PE foams.

BACKGROUND OF THE INVENTION

Coaxial/radio frequency cables made of highly foamed polyethylene are widely used as antenna feeders, cabling of antenna arrays, equipment interconnections, mobile telecommunication systems, microwave transmission systems, broadcast transmission systems and other communication systems. As demand for high bandwidth increases, cables require the use of a highly foamed dielectric made with polymer resins, e.g., a polyolefin, with minimum polar groups or polar additives and which are cost effective and have good electrical properties.

Usually, a high frequency cable is made of an inner conductor surrounded by a foamed insulation. The base resin for insulation is generally a mixture of high density polyethylene (HDPE), high pressure low density polyethylene (HPLDPE, or simply, LDPE) and a nucleating master batch. In general, the ratio of HDPE to LDPE is 70-80% HDPE/30-20% LDPE. The nucleating master batch is typically added at about 1-3% and is generally also based on a LDPE resin. Due to less branching in the molecular structure of HDPE, the dissipation factor (Df) of HDPE is lower than LDPE and as such, the majority of base resin for cable insulation is typically HDPE. Moreover, this provides desirable mechanical properties to the foam such as high crush resistance. LDPE, in contrast, enhances the overall melt strength of the base resin due to its branched structure.

In early attempts, the foaming step was implemented by compounding the base polymer resin with a specific chemical foaming agent capable of blowing closed cells of desired size. For a typical wire and cable gas injection foaming line, the porosity of the HDPE/LDPE (7/3) blend can reach 75-80% depending on customer lines. However, chemical foaming processes can only achieve lower levels of foaming and also suffer from the fact that the polymeric dielectric material traps residue of the foaming agent that deteriorates the dissipation factor. The lower foaming level and presence of residues from the foaming agent result in higher signal attenuation, especially at the upper end of the frequency range.

Physical foaming of polymers is generally carried out by dissolving a blowing agent into the polymer matrix. Subsequently, the solubility of the blowing agent is reduced rapidly by producing thermodynamic instability in the structure (e.g., by increasing temperature or decreasing pressure), to induce nucleation and the growth of bubbles. The industrial practice for physical foaming for cable insulations is based on the similar concept by injecting an inert gas (such as nitrogen) to blow the gas filled expanded cell. Adding a nucleating agent is a frequently used and effective technique to reduce cell size, enhance cell density and uniform cell distribution.

US 2004220287 describes a low loss foam composition and cable, such as a coaxial cable.

JP2002338722 describes a crosslinked polyethylene foam for cutting processing easily subjected to slit processing and polishing processing and allowing processing with a high precision.

US6492453 describes zero halogen polyolefin compositions exhibit low smoke emission, low corrosivity, low toxicity, and low heat release properties, as well as flame resistance and char formation, while simultaneously maintaining favorable electrical insulation properties.

For the current nitrogen ($N_2$) foaming process, the resulting porosity is in the range of 50-80%, and, correspondingly, the Df of current PE foam is around 0.0002-0.00015 (at 2.47Ghz), which marginally meets the current high-end cable requirement. However, the insulation need for reduced cable attenuation with higher frequency remains unmet. Increasing the expansion ratio of the insulation of telecom cable is one way to reduce Df. The expansion ratio is a measure of the void, or empty space, in the insulation and is generally measured as the ratio of the volume of the voids to the total volume of the foam. Attempts at higher porosity in the $N_2$ foaming process often result in foam cell collapse and non-uniform structures. Either a new PE base formulation or a breakthrough in foaming process is required to enable the production of high porosity PE insulation foam in cable industry.

SUMMARY OF THE INVENTION

In the first aspect there is provided a process as defined in claim 1.

In one embodiment the invention is a process for making a foam composition, the process comprising the steps of:

(A) Forming a mixture comprising high density polyethylene (HDPE), low density polyethylene (LDPE) and a peroxide, e.g., di-t-amyl peroxide (DTAP, CAS # 10508-09-5); and

(B) Contacting the mixture of (A) with carbon dioxide ($CO_2$) at a pressure greater than or equal to 15 megaPascals (MPa) or under typical extrusion conditions.

The mixture of (A) further comprises the $CO_2$-philic compound polydimethylsiloxane (PDMS). The introduction of the $CO_2$-philic compound into the mixture of (A) favors the solubility of the $CO_2$ in the resin blend and this, in turn, increases the porosity of the foam (relative to a foam similarly prepared but without the use of the $CO_2$-philic compound).

In one embodiment, the invention is a foam composition made by the process described above.

The foams of this invention exhibit a high expansion ratio of up to 85%porosity. The peroxide is used in relatively small amounts and in one embodiment, the foaming step is performed with supercritical carbon dioxide ($ScCO_2$). In one embodiment, the peroxide modified polymer blend has a low Df value of $15*10^{-5}$.

In one embodiment, the process of the invention produces a foam composition useful in the manufacture of cables for use in high frequency applications (greater than (>) 3GHz). The foams made by the process of the invention (1) comprise an HDPE/LDPE blend with a low Df value, e.g., about $11*10^{-5}$, and (2) exhibit a slight crosslinking via reaction with peroxide, e.g., DTAP. The former favors a foam with a low Df value and the latter favors good melt strength for the resins but a minimum negative impact on dissipation factor, (mixture of (A)) which, in turn, further improves the porosity of the foam. In this invention, the $ScCO_2$ foaming process is applied and pure $CO_2$ is used as blowing agent during present foaming process.

BRIEF DESCRIPTION OF THE DRAWINGS

Figure 1 is a schematic of the batch foaming apparatus used in the examples.

Figure 2 is a graph for the theoretic estimation of Df and porosity used to calculate the Df and porosity of certain compositions reported in the examples.

Figure 3 is a set of scanning electron microscopy (SEM) images used to calculate the cell sizes of certain of the foams reported in the examples.

DETAILED DESCRIPTION OF THE PREFERRED EMBODIMENT

*Definitions*

Unless stated to the contrary, implicit from the context, or customary in the art, all parts and percents are based on weight and all test methods are current as of the filing date of this disclosure. For purposes of United States patent practice, the contents of any referenced patent, patent application or publication are incorporated by reference in their entirety (or its equivalent US version is so incorporated by reference), especially with respect to the disclosure of definitions (to the extent not inconsistent with any definitions specifically provided in this disclosure) and general knowledge in the art.

The numerical ranges disclosed herein include all values from, and including, the lower and upper value. For ranges containing explicit values (e.g., 1 or 2; or 3 to 5; or 6; or 7), any subrange between any two explicit values is included (e.g., 1 to 2; 2 to 6; 2.5 to 6.5; 5 to 7; 3 to 7; 5 to 6; etc.).

"High pressure $CO_2$" and like terms means $CO_2$ at a pressure of greater than ambient pressure (>0.1 MPa), including $CO_2$ in a sub-critical or super-critical state. The critical pressure of $CO_2$ is 7.4 MPa.

*High Density Polyethylene (HDPE)*

A "high density polyethylene" (or "HDPE") is an ethylene-based polymer having a density of at least 0.94 g/cc, or from at least 0.94 g/cc to 0.98 g/cc. The HDPE has a melt index from 0.1 g/10 min to 25 g/10 min.

The HDPE can include ethylene and one or more $C_3$-$C_{20}$ $\alpha$-olefin comonomers. The comonomer(s) can be linear or branched. Nonlimiting examples of suitable comonomers include propylene, 1-butene, 1 pentene, 4-methyl-1-pentene, 1-hexene, and 1-octene. The HDPE can be prepared with either Ziegler-Natta, chromium-based, constrained geometry or metallocene catalysts in slurry reactors, gas phase reactors or solution reactors. The ethylene/$C_3$-$C_{20}$ $\alpha$-olefin comonomer includes at least 50 percent by weight ethylene polymerized therein, or at least 70 percent by weight, or at least 80 percent by weight, or at least 85 percent by weight, or at least 90 weight percent, or at least 95 percent by weight ethylene in polymerized form.

In an embodiment, the HDPE is an ethylene/$\alpha$-olefin copolymer with a density from 0.95 g/cc to 0.98 g/cc, and a melt index from 0.1 g/10 min to 10 g/10 min. In an embodiment, the HDPE has a density from 0.960 g/cc to 0.980 g/cc, and a melt index from 0.1 g/10 min to 10 g/10 min.

In an embodiment, the HDPE has a density from 0.95 g/cc, or 0.96 g/cc to 0.97 g/cc and a melt index from 0.1

g/10 min to 10 g/min.

In an embodiment, the HDPE has a density from 0.96 g/cc to 0.98 g/cc and a melt index from 1.0 g/10 min to 10.0 g/10 min.

Nonlimiting examples of suitable HDPE include ELITE 5960G, HDPE KT 10000 UE, HDPE KS 10100 UE and HDPE 35057E, each available from The Dow Chemical Company Midland, Michigan, USA; and SURPASS® available from Nova Chemicals Corporation, Calgary, Alberta, Canada.

*Low Density Polyethylene (LDPE)*

The LDPE resins are well known in the art, commercially available, and made by any one of a wide variety of processes including, but not limited to, solution, gas or slurry phase, and high pressure tube or autoclave; Ziegler-Natta, metallocene or constrained geometry catalyzed (CGC); etc. These resins have a density of 0.915 to 0.925 g/cm$^3$, and a melt index (MI, $I_2$) of 0.15 to 50 grams per 10 minutes (g/10 min). The polyethylene can have a broad molecular weight distribution, characterized by a polydispersity (Mw/Mn) of greater than 3.5, or a narrow molecular weight distribution, characterized by a polydispersity (Mw/Mn) in the range of 1.5 to 3. Mw is defined as weight average molecular weight, and Mn is defined as number average molecular weight.

Commercially available LDPE resins include but are not limited to DOW Low Density Polyethylene resins available from The Dow Chemical Company and, in general, any fractional melt flow index (MFI) resin for use in heavy duty bags or agricultural films such as those available from Borealis, Basel, Sabic and others.

Specific examples of LDPE useful in this invention include homogeneously branched, linear ethylene/alpha-olefin copolymers (e.g. TAFMER™ by Mitsui Petrochemicals Company Limited and EXACT™ by Exxon Chemical Company), homogeneously branched, substantially linear ethylene/alpha-olefin polymers (e.g., AFFINITY™ and ENGAGE™ polyethylene available from The Dow Chemical Company), and olefin block copolymers such as those described in USP 7,355,089 (e.g., INFUSE™ available from The Dow Chemical Company). The more preferred LDPE are the homogeneously branched linear and substantially linear ethylene copolymers. The substantially linear ethylene copolymers are especially preferred, and are more fully described in USP 5,272,236, 5,278,272 and 5,986,028.

*HDPE/LDPE Blend*

The amount of HDPE in the HDPE/LDPE blend, based on the weight of the composition, is typically at least 45 weight percent (wt %), more typically at least 55 wt% and even more typically at least 60 wt%. The amount of HDPE in the polyolefin composition, based on the weight of the composition, typically does not exceed 95 wt%, more typically it does not exceed 85 wt% and even more typically it does not exceed 80 wt%. The amount of LDPE in the HDPE/LDPE blend, based on the weight of the composition, is typically at least 5 weight percent (wt %), more typically at least 15 wt% and even more typically at least 20 wt%. The amount of LDPE in the polyolefin composition, based on the weight of the composition, typically does not exceed 55 wt%, more typically it does not exceed 45 wt% and even more typically it does not exceed 40 wt%. In one embodiment, a minor amount, e.g., less than 5, or 4, or 3, or 2, or 1, wt% of one or more other polymers, e.g., one or more other polyolefins such as polypropylene, may be present in the blend.

*Peroxide*

The peroxide is di-t-amyl peroxide. Other suitable free radical initiators used as crosslinking agents are the dialkyl peroxides and diperoxyketal initiators. These compounds are described in the Encyclopedia of Chemical Technology, 3rd edition, Vol. 17, pp. 27-90 (1982). Mixtures of two or more free radical initiators may also be used together as the free radical initiator.

In the group of dialkyl peroxides, nonlimiting examples of suitable free radical initiators are: dicumyl peroxide; di-t-butyl peroxide; t-butyl cumyl peroxide; 2,5-dimethyl-2,5-di(t-butylperoxy)-hexane; 2,5-dimethyl-2,5-di(t-amylperoxy)-hexane; 2,5-dimethyl-2,5-di(t-butylperoxy)hexyne-3,2,5-dimethyl-2,5-di(t-amylpero-xy)hexyne-3; $\alpha,\alpha$-di[(t-butylperoxy)-isopropyl]-benzene; di-t-amyl peroxide (DTAP); 1,3,5-tri-[(t-butylperoxy)-isopropyl]benzene; 1,3-dimethyl-3-(t-butylperoxy)butanol; 1,3-dimethyl-3-(t-amylperoxy) butanol; and mixtures of two or more of these initiators.

In the group of diperoxyketal initiators, nonlimiting examples of suitable free radical initiators include: 1,1-di(t-butylperoxy)-3,3,5-trimethylcyclohexane; 1,1-di(t-butylperoxy)-cyclohexane n-butyl; 4,4-di(t-amylperoxy)valerate; ethyl 3,3-di(t-butylperoxy)butyrate; 2,2-di(t-amylperoxy)propane; 3,6,6,9,9-pentamethyl-3-ethoxycarbonylmethyl-1,2,4,5-tetra-oxacyclononane; n-butyl-4,4-bis(t-butylperoxy)-valerate; ethyl-3,3-di(t-amylperoxy)-butyrate; and mixtures of two or more of these initiators.

The amount of free radical initiator present in the composition can vary with the minimum amount being sufficient to afford the desired range of crosslinking. The minimum amount of peroxide is at least about 0.02 wt %, or at least about 0.05 wt %, or at least about 0.1, weight percent (wt%) based upon the weight of the HDPE/LDPE blend. The

maximum amount of free radical initiator in the composition can vary, and it is typically determined by such factors as cost, efficiency and degree of desired crosslinking. The maximum amount may be less than about 2 wt %, or less than about 1 wt %, or less than about 0.5, wt % based upon the weight of the HDPE/LDPE blend.

*$CO_2$-Philic Compound*

"Polydimethylsiloxane fluids", " polymeric organosilicon materials" and like terms refer to a variety of siloxane-based polymers having repeating units based on Formula (I), such as, for example, XIAMETER™ PMX-200 Silicone Fluid 1,000 CS from Dow Corning Corporation having a kinetic viscosity of 1000 $mm^2/S$ (1000 centistokes).

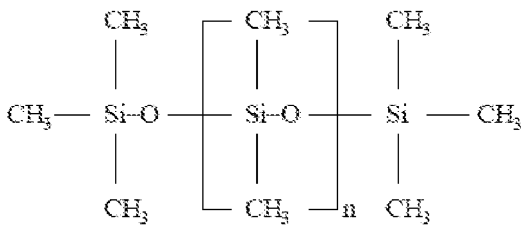

(I)

Where n is >4.

*Additives*

Nucleating agents, such as fluororesin particles (e.g., polytetrafluoroethylene (PTFE)), azodicarbonamide (ADCA), talc, silica, zeolites, boron nitride and the like, including mixtures of two or more agents, can be used to improve foaming. The loading range of nucleating agent is from 0.01% to 1%, preferably from 0.05% to 0.6%, most preferably from 0.1% to 0.5%.

*Compounding*

Compounding of the blended compositions of this invention can be performed by standard means known to those skilled in the art. Examples of compounding equipment are internal batch mixers, such as a HAAKE™, BANBURY™ or BOLLING™ internal mixers. Alternatively, continuous single or twin screw mixers can be used, such as a FARREL™ continuous mixer, a WERNER and PFLEIDERER™ twin screw mixer, or a BUSS™ kneading continuous extruder. The type of mixer utilized, and the operating conditions of the mixer, can affect properties of the composition such as viscosity, volume resistivity, and extruded surface smoothness.

The compounding temperature for the blends of this invention is typically from 170°C to 200°C to ensure the complete reaction of peroxide with HDPE/LDPE polymer blend, more typically from 180°C to 190°C. The various components of the final composition can be added to and compounded with one another in any order, or simultaneously, but typically the HDPE and LDPE are first compounded with one another and then the peroxide and, if present, the $CO_2$-philic compound are added either one before the other or simultaneously. Alternatively, the $CO_2$-philic compound and/or peroxide are first formulated into a masterbatch with either or both the HDPE and LDPE as the carrier resin and then the masterbatch is added to the HDPE/LDPE blend. In embodiments where the peroxide is formulated into a masterbatch or otherwise compounded with one or more components prior to inclusion in the final formulation ("preblend"), the masterbatch or peroxide-containing preblend should be prepared at a temperature below the activation temperature of the peroxide to avoid peroxide decomposition prior to preparation of the final formulation. For example, when dicumyl peroxide is employed, preparation of a peroxide-containing masterbatch or preblend should be performed at temperatures below about 145°C.

*Foaming Process*

In one embodiment, the HDPE/LDPE blends of this invention are contacted with $CO_2$ under typical extrusion conditions and foamed at the same time that the insulation is being extruded onto the conductor. As the compound exits the extrusion die, pressure drop results in foaming by the dissolved gas. Methods for extrusion foaming are well known in the art.

EXAMPLES

*Test Methods*

*Gel Content*

About 1.5 grams (g) crosslinked samples are weighed and then packaged with metal net with the 180 meshes. The weights of sample before and after packaged are recorded. The packaged samples are inserted in a 250mL flask and then immersed with 200 mL toluene. After boiling at 120°C for at least 6 hours, the packaged samples are removed from the flask and dried at room temperature for 24 hours. The remnant weight is also recorded. Gel content is calculated by the equation:

$$Gel\% = \frac{W1 - W2}{W0} * 100\%$$

where

W1 is weight after packaged with metal mesh;
W2 is weight before packaged with metal mesh; and
W0 is weight of initial sample.

*Cell Size Analysis*

The PE foam sample is fractured utilizing liquid nitrogen and then coated with Iridium. Scanning Electron Microscopy (SEM) images (Figure 3) are obtained with different magnification. The average cell size is obtained through the analysis of the SEM photographs by the software of Image-Pro Plus 6.0 from Media Cybernetics.

*Density*

Foam densities are measured according to ASTM D792-00 involving weighing polymer foam in water using a sinker.

*Dissipation Factor (Df)*

Dissipation Factor measurements are conducted on a High Frequency Split Post Dielectric Resonator at a frequency of 2.47 gigahertz (GHz) on 1.27 mm (50 mil) compression molded plaques. Before measurements, the plaques are conditioned for 24hours at room temperature (21-24°C) in a desiccant chamber.
(I)

*Porosity*

Porosity is calculated based on the density of sample before and after foaming. The density of the foamed article and solid plaque are measured according to ASTM D792.

$$Porosity = \left(1 - {\rho_{foam}}/{\rho_{solid}}\right) * 100\%$$

*Materials*

Tables 1 and 2 report the materials used in these examples.

Table 1

| Materials | | |
|---|---|---|
| Chemicals | Producer | Product specification |
| HDPE (High density polyethylene) | Dow Chemical Co. Ltd | Grade: DGDA-6944; MFR (190 °C /2.16kg): 8.0g/10min |
| LDPE (Low density polyethylene) | Dow Chemical Co. Ltd | Grade: DFDB-1258, MFR (190 oC /2.16kg): 1.8g/10min |
| 2,5 dimethyl-2,5-di-(tert-butylperoxy) hexane | 0.05- 1 | Initiator, LUPEROX™ L-101 Peroxide |
| Dicumyl peroxide | Arkema Co. Ltd | Initiator |
| Di-t-amyl peroxide (DTAP) | Tianjin McRIT Co. Ltd | Molecular weight: 174.3 Theoretical active Oxygen content: 9.18% CAS No. : 10508-09-5 |
| PMX-200 Silicone | Dow Corning Co. Ltd | Molecular weight (Mw): 20,000 |
| Carbon dioxide ($CO_2$) | Air product Co. Ltd | purity: 99.9% |

Table 2

| F ormulation of PDMS Reactive Compounding with HDPE | |
|---|---|
| Chemicals | Weight ratio (%) |
| HDPE | 69.9 |
| LDPE | 30 |
| DTAP | 0.1 |
| PMX-200 | 1 |

*Procedure*

*Compounding*

HDPE, LDPE, peroxide and PDMS are separately weighed into a beaker according to the formulation in Table 2, and then blended with one another to form a relatively homogeneous mass.

HAAKE™ mixing equipment[from Thermo Scientific as HAAKE™ Polylab OS, 50 cubic centimeter] having two sigma rotors rotating in opposite directions is pre-heated to 180°C.

The mixture of HDPE, LDPE, peroxide and PDMS is added to the mixer through the mixer filling port, and then blended at 180°C for 8 minutes. The rotation rate of is 60 revolutions per minute (rpm).

When the blending is completed, the resulting mixture is withdrawn and cut into small pellets, ready for compression molding.

*Preparation of Polyethylene Plates*

The mixed PE pellets are placed into a mold in a hot plate compression molding machine, e.g., Platent Vulcanizing Press, manufactured by Guangzhou NO.1 Rubber & Plastic Equipment Co. Ltd., preheated to 150°C, held for 5 minutes and then subjected to compression pressure for 10 minutes. The resulting plate is cooled to room temperature (21-24°C) and stored for the foaming experiments.

*Sample Foaming*

Samples are made using a batch foaming apparatus that is intended to represent a laboratory screening test that correlates with extrusion foaming during the wire coating process. The process comprises the steps of loading, preheating, saturating and depressurizing. Figure 1 provides a general description of the process apparatus and layout.

Foaming pressure is from 15 to 35 MPa, and foaming temperature is from 95°C to 105°C for LDPE and 125°C to 150°C for HDPE. The foaming temperature for the blend is from 120°C to 130°C. Crosslinking polyethylene with peroxide using HAAKE™ or extrusion to form a crosslinked intermediate; molding the crosslinked intermediate to form a molded intermediate plaques having a dimensions of 15 mm by 10 mm by 1 mm; and foaming the molded intermediate plaques using high-pressure $CO_2$ to form the foam. The polymer plaque is stood on end in a pressure vessel on a thin layer of glass wool which rests on top of the aluminum plug. The pressure vessel is heated to 150°C for 30 minutes. The pressure in the pressure vessel is then increased to 23 MPa by charging the vessel with a pressurized atmosphere comprising the foaming agent and saturate polymer melt with foaming agent at temperature of 150°C and pressure of 23 MPa pressure for 2 hours. Then pressure vessel is cooled down to foaming temperature of 127°C and keep the foaming temperature for 30 minutes. Afterwards, the pressure vessel is rapidly vented, thus depressurizing the pressure vessel, and the foamed sample is collected from the pressure vessel.

As shown in Figure 1, batch foaming apparatus (10) comprises high pressure vessel (11), $CO_2$ injection pump (12), helium driven solenoid valve (13) and corresponding data acquisition system (14) to record the pressure profile after depressurization. By utilizing this foaming equipment, foaming experiments are carried out under a pressure up to 5500 pounds per square inch (psi) (37.9 MPa) and a temperature less than or equal to 160°C. The foaming procedure is as follows:

1. PE sample (in the form of small plate as prepared and described above) with dimensions of 15mm×10mm×1mm is placed vertically in pressure vessel 11, on a thin layer of glass wool (not shown) on top of the aluminum plug (not shown).

2. Oven (15) is set to a pre-heating temperature of 150°C for 30 minutes.

3. Oven (15) is set to and kept at the foaming temperature for about 1 hour prior to starting the experiment.

4. The pressure is increased to the saturation pressure (23 MPa shown in Table 3) and maintained under these conditions for 2 hours. Then oven is cooled to a foaming temperature of 127°C and the oven is kept at 127°C for 30 minutes as shown in Table 3.

5. Valve 4 (V4) is opened, and the pressure in the high pressure chamber is rapidly released.

6. After rapid depressurization, vessel (11) is opened and the foamed sample is collected for analysis.

Table 3 reports the processing conditions for both the comparative examples and inventive examples. Various measured sample properties are also reported in Table 3.

Table 3

Foaming Process Parameters and Sample Properties

| Examples | Foaming Temp. (°C) | Saturation pressure (MPa) | Saturatio n time (hr) | Base resin | Gel content (%) | Df of panel (*$10^{-5}$) | Porosity by CO2 in batch foaming (%) | Pore Size (μm) | Percentage of Df improvement after foaming* (%) |
|---|---|---|---|---|---|---|---|---|---|
| Control 1 | 127 | 23 | 2 | 100% HDPE | - | 7 | 76 | 15-25 | - |
| Control 2 | 127 | 23 | 2 | HDPE/LDPE=70/ 30 | - | 11 | 75 | 10-25 | - |
| Control 3 | 127 | 23 | 2 | HDPE//PMX-200PMX-200=98/2 | - | 23 | 79 | <10 | - |
| Control 4 | 127 | 23 | 2 | HDPE/LDPE/PM X-200PMX-200=69/30/1 | - | -20 | 80 | <15 | |
| Control 5 | - | - | - | HDPE/LDPE/DCP =69.9/30/0.1 | 5.2 | 57 | - | - | - |
| Control 6 | - | - | - | HDPE/LDPE/L10 1=69.9/30/0.1 | 4.0 | 44 | - | - | - |
| Ex. 1 | 127 | 23 | 2 | HDPE/LDPE/DT AP=69.95/30/0.05 | 5.3 | 14 | 82 | <10 | +66 |
| Ex. 2 | 127 | 23 | 2 | HDPE/LDPE/DT AP=69.9/30/0.1 | 10.7 | 12 | 83 | <10 | +72 |
| Ex. 3 | 127 | 23 | 2 | HDPE/LDPE/DT AP/PMX-200PMX-200=67.9/30/0.1 /1 | 8.5 | 18 | 84 | <5 | +64 |
| Ex. 4 | 127 | 23 | 2 | HDPE/LDPE/DT AP/PMX-200PMX-200=68.9/30/0.1/2 | 10.5 | - | 85 | <10 | - |

*Percentage of Df improvement after foaming is calculated by comparing with that of Control 2 (HDPE/LDPE=70/30) without foaming. The Df data with different porosities is a theoretical estimate based on Figure 2.

The dissipation factor of the foam extrudate is calculated using Equation 1.

$$tg\delta_\gamma = tg\delta_\theta + \frac{2\varepsilon_\theta tg\,\delta_\theta (1-P)}{2\varepsilon_\theta + 1 - 2P(\varepsilon_\theta - 1)} - \frac{\varepsilon_\theta tg\,\delta_\theta (2+P)}{2\varepsilon_\theta + 1 + P(\varepsilon_\theta - 1)}$$

Equation 1

Equation 1 is cited in Electrical Properties of Polymer: Chemical Principles, Hanser Publishers, 1976

Definition of Symbols:

P: porosity
$\varepsilon_\theta$: dielectric constant of resin before foaming, c.a. 2.32 here
$tg\delta_\theta$: dissipation factor of solid resin blends
$tg\delta_\gamma$: dissipation factor of foam extrudate

For example, the calculation of the dissipation factor for the foam extrudate of Control 2 is:

$$\tan\delta_\gamma = \tan\delta_\theta + \frac{2\varepsilon_\theta \tan\delta_\theta (1-P)}{2\varepsilon_\theta + 1 - 2P(\varepsilon_\theta - 1)} - \frac{\varepsilon_\theta \tan\delta_\theta (2+P)}{2\varepsilon_\theta + 1 + P(\varepsilon_\theta - 1)}$$

Equation 2

P: porosity is 76%
tan $\delta_\theta$: dissipation factor of solid resin blends is 0.00011,
$\varepsilon_\theta$: dielectric constant of resin before foaming is 2.32

$$\tan\delta_\gamma = 0.00011 + \frac{2*2.32*0.00011(1-0.76)}{2*2.32+1-2*0.76(2.32-1)} - \frac{2.32*0.00011(2+0.76)}{2*2.32+1+0.76(2.32-1)}$$

Equation 3

Thus dissipation factor tan $\delta_\gamma$ = 0.000037686.

As another example, the calculation of the dissipation factor for the foam extrudate of Example 2 is:

P: porosity is 83%
tan $\delta_\theta$: dissipation factor of solid resin blends is 0.00012,
$\varepsilon_\theta$: dielectric constant of resin before foaming is 2.32

$$\tan\delta_\gamma = 0.00012 + \frac{2*2.32*0.00012(1-0.83)}{2*2.32+1-2*0.83(2.32-1)} - \frac{2.32*0.00012(2+0.83)}{2*2.32+1+0.83(2.32-1)}$$

Equation 4

Thus dissipation factor tan $\delta_\gamma$ = 0.000030475.

Percentage of Df improvement after foaming is calculated by comparing with that of Control 2 (0.00011) without foaming as follow:

$$\text{Df improvement after foaming }\% = \frac{0.00011 - 0.000030475}{0.00011} * 100\% = 72\%$$

Equation 5

*Discussion of Results*

In one embodiment the invention is peroxide selection for PE polymer resin system modification which has minimum deterioration on the DF property. Compared to DCP (control 5, DF of 57*10-5) and L101 (control 6, DF of 44*10-5), DTAP modified HDPE/LDPE blend has the lowest DF data, ca. 12*10-5 (Ex.2) when peroxide loading is 0.1% for all formulations.

As seen in Table 3, for pure HDPE resin and HDPE/LDPE=70/30, their porosity foamed by $CO_2$ at 127°C is 76% and 75%, respectively. Under these foaming conditions, the porosity of the HDPE/LDPE blend hardly improves although the LDPE is mixed with HDPE. In Control 3 and Control 4, the introduction of PMX-200 slightly increases the porosity relative to Control 1 and Control 2. Moreover, their pore sizes also clearly decrease. This is because PDMS is a $CO_2$-philic compound and its addition can improve the CO2 solubility in PE resins.

In Ex. 1, the addition of DTAP peroxide into the HDPE/LDPE blend under the same reaction conditions in the HAAKE™ mixer did bring an increase in porosity. Its porosity reached 82%, moreover, its pore size decrease to less than 10 microns (seen in Figure 3). This is because the melt strength of the PE resin increases due to chain coupling or tailoring induced by the peroxide decomposition (not enough peroxide is added to yield crosslinking and the system remains thermoplastic as demonstrated by extrudability and foamability.

With an increase in the amounts of DTAP and PMX-200, the porosity of the peroxide-modified samples also increase. The highest porosity is reported in Ex.4. Of note is that when the amount of PMX-200 is increased to 2%, pore size clearly increases relative to that which is achieved with 1% of PDMS 200.

The Df data of the comparative examples and several of the inventive examples are also listed in Table 3. For Control 1 and 2, the Df data are 7*10-5 and 11*10-5, respectively. The introduction of LDPE resulted in a Df increase. The effect of PMX-200 and different peroxides such as DCP and L101 on Df is also reported. When 1% PMX-200 is added into the blend of HDPE/LDPE, the Df of blend increases from 11*10-5 to 20*10-5 When 2% PDMS is added into the neat HDPE, the Df increases from $7*10^{-5}$ to $23*10^{-5}$. By comparison, DTAP with the same amount (0.1%) hardly results in a negative impact on the Df of the resin of Example 2, i.e., 12*10-5. When adding 1% PMX-200, the Df increased to 18*10-5 (Ex. 3). By theoretic estimation as shown in Figure 2, the after foaming Df values of the foamed examples (Ex. 1, 2 and 3) are improved by 66%, 72% and 64% relative to the Control 2 without foaming.

**Claims**

1. A process for making a foam composition, the process comprising the steps of:

   (A) forming a mixture comprising high density polyethylene (HDPE), low density polyethylene (LDPE) and a peroxide; wherein the peroxide is di-t-amyl peroxide; wherein the minimum amount of peroxide is at least about 0.02wt% based upon the weight of the HDPE/LDPE blend; wherein the mixture of (A) further comprises a $CO_2$-philic compound; wherein the $CO_2$-philic compound is polydimethylsiloxane;
   and
   (B) contacting the mixture of (A) with carbon dioxide ($CO_2$).

2. The process of Claim 1 in which the mixture of (A) and the $CO_2$ are contacted at a pressure greater than or equal to 15 megaPascals (MPa).

3. The process of Claim 1 in which the mixture of (A) and the $CO_2$ are contacted under extrusion conditions.

4. The process of claim 1 in which the HDPE comprises greater than 50 weight percent of the mixture of (A).

5. Foam made by any of the processes of claims 1-4.

## Patentansprüche

1. Ein Verfahren zum Herstellen einer Schaumstoffzusammensetzung, wobei das Verfahren die folgenden Schritte beinhaltet:

   (A) Bilden einer Mischung, die Polyethylen hoher Dichte (HDPE), Polyethylen niederer Dichte (LDPE) und ein Peroxid beinhaltet; wobei das Peroxid Di-t-amylperoxid ist; wobei die Mindestmenge an Peroxid, bezogen auf das Gewicht des HDPE/LDPE-Gemischs, mindestens ungefähr 0,02 Gew.-% beträgt; wobei die Mischung von (A) ferner eine $CO_2$-phile Verbindung beinhaltet; wobei die $CO_2$-phile Verbindung Polydimethylsiloxan ist; und
   (B) In-Kontakt-Bringen der Mischung von (A) mit Kohlendioxid ($CO_2$).

2. Verfahren gemäß Anspruch 1, wobei die Mischung von (A) und das $CO_2$ unter einem Druck von größer als oder gleich 15 Megapascal (MPa) in Kontakt gebracht werden.

3. Verfahren gemäß Anspruch 1, wobei die Mischung von (A) und das $CO_2$ unter Extrusionsbedingungen in Kontakt gebracht werden.

4. Verfahren gemäß Anspruch 1, wobei das HDPE mehr als 50 Gewichtsprozent der Mischung von (A) ausmacht.

5. Ein durch eines der Verfahren gemäß den Ansprüchen 1-4 hergestellter Schaumstoff.

## Revendications

1. Un procédé pour la fabrication d'une composition de mousse, le procédé comprenant les étapes :

   (A) de formation d'un mélange comprenant un polyéthylène haute densité (PEHD), un polyéthylène basse densité (PEBD) et un peroxyde ; où le peroxyde est le peroxyde de di-t-amyle ; où la quantité minimum de peroxyde est d'au moins environ 0,02 % en poids rapporté au poids du mélange homogène PEHD/PEBD ; où le mélange de (A) comprend en outre un composé $CO_2$-phile ; où le composé $CO_2$-phile est le polydiméthylsiloxane ;
   et
   (B) de mise en contact du mélange de (A) avec du dioxyde de carbone ($CO_2$).

2. Le procédé de la revendication 1 où le mélange de (A) et le $CO_2$ sont mis en contact à une pression supérieure ou égale à 15 mégaPascals (MPa).

3. Le procédé de la revendication 1 où le mélange de (A) et le $CO_2$ sont mis en contact dans des conditions d'extrusion.

4. Le procédé de la revendication 1 où le PEHD comprend plus de 50 pour cent en poids du mélange de (A).

5. Mousse fabriquée par n'importe lesquels des procédés des revendications 1 à 4.

Batch foaming apparatus set up

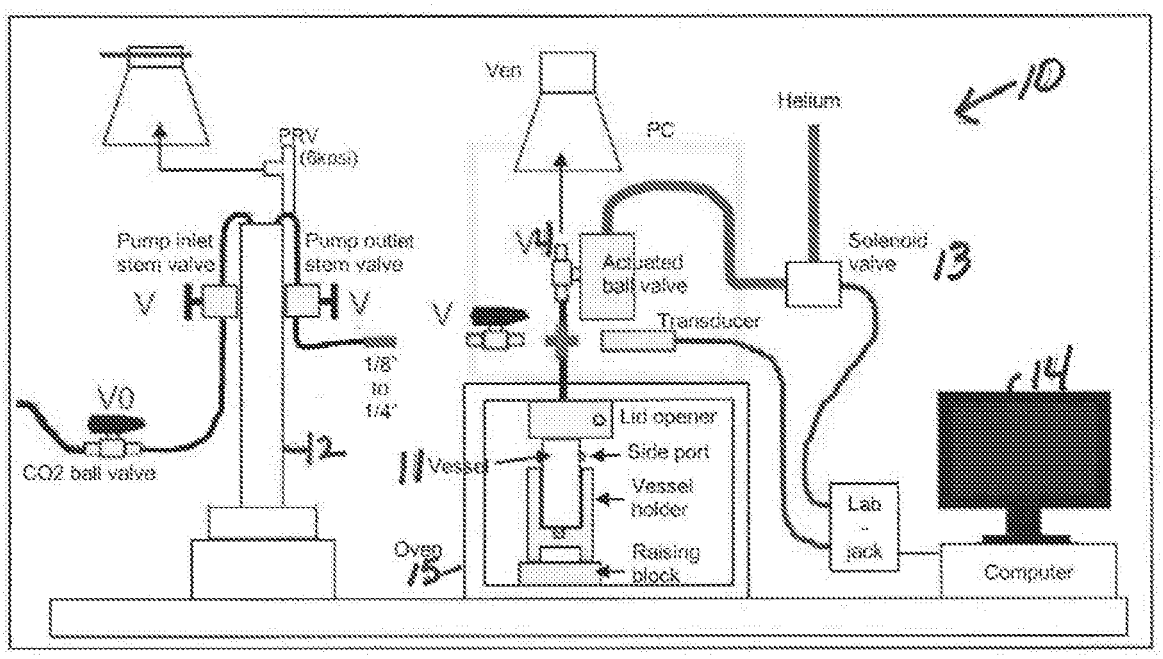


Figure 1

Theoretic estimation of Df and porosity

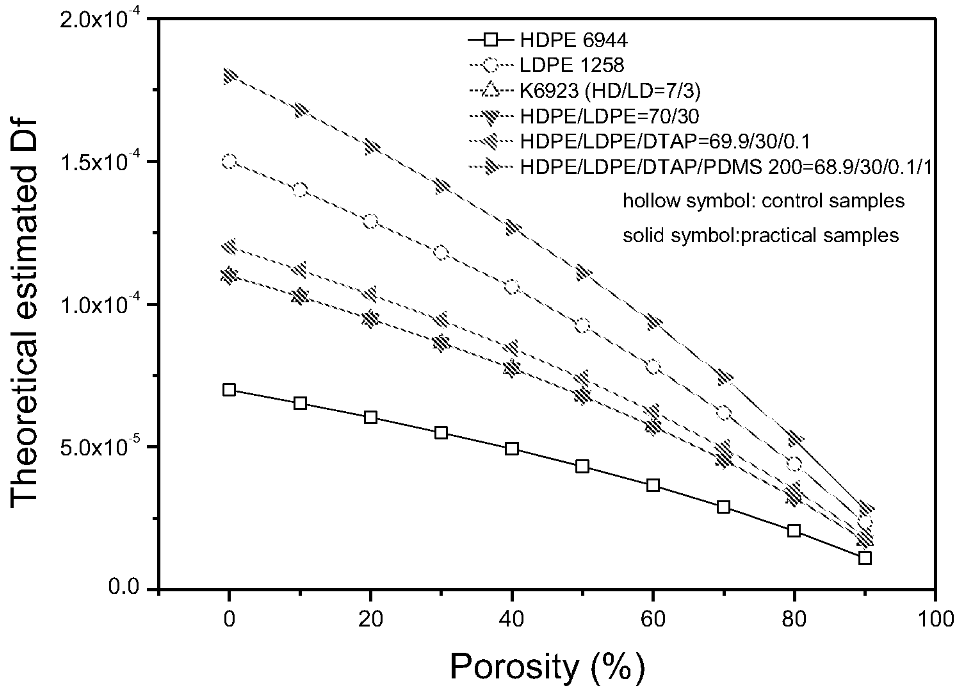


**Figure 2**

Morphologies of foamed resins

Control 1 Control 2 Control 3 Control 4

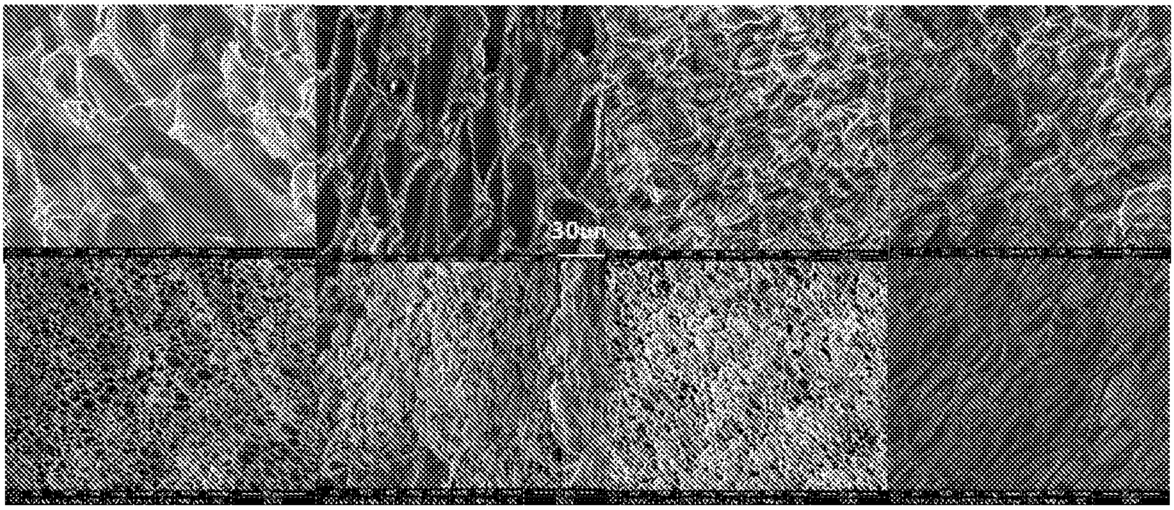

Ex. 1 Ex. 2 Ex. 3 Ex. 4

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004220287 A
- JP 2002338722 B
- US 6492453 B
- US P7355089 B
- US P5272236 A
- US 5278272 A
- US 5986028 A

### Non-patent literature cited in the description

- the Encyclopedia of Chemical Technology. 1982, vol. 17, 27-90
- Electrical Properties of Polymer: Chemical Principles. Hanser Publishers, 1976